# EUROPÄISCHE PATENTSCHRIFT

(11) **EP 3 466 851 B1**
(45) Veröffentlichungstag und Bekanntmachung des Hinweises auf die Patenterteilung: **08.03.2023**
(21) Anmeldenummer: 17196622.9
(22) Anmeldetag: 16.10.2017
(51) Int. Cl.: B65G 69/00

(54) **PUFFERVORRICHTUNG ZUR MONTAGE IM BEREICH EINER LKW-LADESTATION SOWIE SYSTEM**
BUFFER DEVICE FOR MOUNTING IN THE AREA OF A TRUCK CHARGING STATION AND SYSTEM
DISPOSITIF TAMPON PERMETTANT DE MONTER UN POSTE DE CHARGE D'UN POIDS LOURD AINSI QUE SYSTÈME

(30) Priorität: 09.10.2017 DE 102017123378
(43) Veröffentlichungstag der Anmeldung: 10.04.2019
(73) Patentinhaber: Alfred Arnold Verladesysteme GmbH & Co. KG, 70439 Stuttgart (DE)
(72) Erfinder: Arnold, Alfred, 70439 Stuttgart (DE)
(74) Vertreter: Patent- und Rechtsanwälte Behrmann Wagner PartG mbB

(56) Entgegenhaltungen:
- DE-A1- 10 003 744

## Beschreibung

Die Erfindung betrifft eine Puffervorrichtung nach Anspruch 1 zur Montage im Bereich einer eine Ladeöffnung umfassenden LKW-Ladestation, insbesondere einer Verladerampe, zur Energieabsorption bei Kontakt mit einem rückwärts an die LKW-Ladestation auffahrenden LKW-Heck, umfassend wenigstens eine sich entlang einer Längsachse und einer senkrecht darauf orientierten Breitenachse erstreckenden, mindestens einen Federbügel aufweisenden Federbügelanordnung, die im Bereich eines ersten Endes in einem Lagerabschnitt um eine sich parallel zur Breitenachse orientierte Schwenkachse einer Schwenklagerung auslenkbar gelagert und an einer Vorderseite einer zwei entlang der Breitenachse zueinander beabstandete, bevorzugt parallele, Seitenkanten umfassenden Trägerplatte festgelegt ist, wobei die Schwenklagerung zwei entlang der Breitenachse um einen Lagerabstand beabstandete Kraftaufnahmeelemente aufweist, zwischen denen der Lagerabschnitt aufgenommen ist und die bevorzugt einen die Schwenkachse definierenden Lagerbolzen tragen, wobei die Federbügelanordnung sich im Bereich eines von dem ersten Ende entlang der Lagerachse beabstandeten zweiten Endes mit einer Abstützfläche an der Vorderseite der Trägerplatte abstützt, um bei elastischer Deformation entlang der Längsachse auf der Trägerplatte entlang einer Gleitstrecke zu gleiten, und wobei die Federbügelanordnung im Bereich des zweiten Endes durch ein, bevorzugt bügelförmiges, eine Aufnahmeöffnung für einen Zungenabschnitt der Federbügelanordnung begrenzendes Sicherungselement gegen ein Abfedern senkrecht zu einer Trägerplattenvorderseitenflächenerstreckung gesichert ist.

Ferner umfasst die Erfindung ein System nach Anspruch 12, umfassend wenigstens eine erfindungsgemäße Puffervorrichtung sowie eine eine Gebäudefläche umfassende LKW-Ladestation.

Puffervorrichtungen für die Montage im Bereich einer LKW-Ladestation als Gebäudeschutz sind aus dem Stand der Technik hinlänglich bekannt. Die Puffervorrichtungen werden seitlich um eine Ladeöffnung der LKW-Ladestation angeordnet und dienen als Rammschutz für die zum Be- und Entladen rückwärts an die Ladeöffnung heranfahrenden LKW-Hecks.

In einer kostengünstigen Grundversion sind die Puffervorrichtungen aus einem elastischen Material, etwa Gummi, aufgebaut und besitzen eine quaderförmige Grundform. Zur Verbesserung der Pufferwirkung kann das elastische Material zudem mit Hohlräumen versehen sein. Nachteilig bei derartigen Puffervorrichtungen sind zum einen die begrenzte Pufferwirkung sowie zum anderen der aufgrund der großen Kraftbeaufschlagung entstehende Materialabrieb. Dies begrenzt die Lebensdauer derartiger Puffervorrichtungen und gleicht die geringen Investitionskosten durch anfallende Wartungskosten für Kontroll- und Austauscharbeiten wieder aus.

Dagegen zeigt eine ein, insbesondere aus Stahl ausgebildete, Federbügel umfassende Puffervorrichtung eine bessere Pufferwirkung sowie eine deutlich höhere Lebensdauer. Eine derartige Puffervorrichtung ist aus der Druckschrift DE 100 03 744 A1 der Anmelderin bekannt und wird schon seit mehreren Jahren erfolgreich als Rammschutz für Gebäude eingesetzt. DE 100 03 744 A1 offenbart insbesondere eine Puffervorrichtung nach dem Oberbegriff des Anspruchs 1.

Die bekannte Puffervorrichtung umfasst eine zwei Seitenkanten umfassende Trägerplatte mit einer auf der Vorderseite der Trägerplatte angeordneten Schwenklagerung zur endseitigen Aufnahme einer auf der Vorderseite der Trägerplatte angeordneten Federbügelanordnung in einem Lagerabschnitt. Die Federbügelanordnung ist aus einem Bandstahl gefertigt und somit auf eine übliche Breitenerstreckung von 150mm begrenzt. Die Schwenklagerung weist zwei entlang einer Breitenachse um einen Lagerabstand beabstandete Kraftaufnahmeelemente auf und ermöglicht das Verschwenken des Federelements um eine parallel zur Breitenachse orientierte Schwenkachse. Die Federbügelanordnung erstreckt sich entlang einer Längsachse und stützt sich an einem zweiten Ende auf der Trägerplatte in einer Abstützfläche ab. Bei einer Kraftbeaufschlagung der Federbügelanordnung gleitet diese dann auf der Vorderseite der Trägerplatte entlang einer Gleitstrecke in Längsrichtung. Zudem ist zur Vermeidung eines Abfederns der Federbügelanordnung senkrecht zur Trägerplatte ein Sicherungselement vorgesehen, das eine Aufnahmeöffnung für einen endseitig an der Federbügelanordnung ausgebildeten Zungenabschnitt ausbildet. Nachteilig bei der bekannten Puffervorrichtung ist, dass die Kraftaufnahmeelemente umfassende Schwenklagerung sowie das Sicherungselement die Breitenerstreckung der Federbügelanordnung begrenzen. Die Folge davon ist, dass die Federbügelanordnung nicht unmittelbar neben der Seitenkante einer Ladeöffnung angeordnet werden kann.

Ausgehend von dem vorgenannten Stand der Technik liegt der Erfindung die Aufgabe zu Grunde, eine verbesserte und universell einsetzbare Puffervorrichtung anzugeben, die bei einem geringen Wartungsaufwand eine hohe Lebensdauer verspricht. Bevorzugt soll es eine erfindungsgemäße Bauweise der Puffervorrichtung ermöglichen breitere Federbügelanordnung einzusetzen und/oder solche, die bezogen auf ihre Breitenerstreckung bis an eine Hochkante einer Gebäudeöffnung heranreichen. Insbesondere soll die Pufferwirkung der Puffervorrichtung anpassbar sein.

Diese Aufgabe wird hinsichtlich der Puffervorrichtung mit den Merkmalen des Anspruchs 1 gelöst, d. h. dass die Federbügelanordnung in einem entlang der Längsachse zwischen dem Lagerabschnitt und dem Zungenabschnitt ausgebildeten Zwischenabschnitt eine größere entlang der Breitenachse orientierte Breitenerstreckung aufweist als in dem Lagerabschnitt und/oder als in dem Zungenabschnitt, insbesondere entlang der Breitenachse bis zu mindestens einer der Seitenkanten der Trägerplatte oder darüber hinaus. Gemäß einer bevorzugten Ausführungsform ist vorgesehen, dass der Zwischenabschnitt der Federbügelanordnung bezogen auf seine Breitenerstreckung bis zu einer, bevorzugt als vertikale Hochkante ausgebildete Seitenkante der Trägerplatte reicht, insbesondere bei an einer LKW-Ladestation montierten Puffervorrichtung bis zu einer vertikalen Gebäudeöffnungskante.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, zur Verbesserung der aus dem Stand der Technik bekannten Puffervorrichtungen die Federbügelanordnung in dem Zwischenabschnitt in der Breitenerstreckung derart zu verlängern, dass der Zwischenabschnitt der, insbesondre aus Stahl ausgebildeten, Federbügelanordnung den Lagerabschnitt und/oder den Zungenabschnitt überragt. In diesem Zusammenhang ist es zudem bevorzugt, wenn der Zwischenabschnitt entlang der Breitenachse bis zu mindestens einer der entlang der Breitenachse beabstandeten, bevorzugt parallelen, bevorzugt im montierten Zustand vertikal orientierten Seitenkanten der Trägerplatte oder sogar darüber hinaus ausgebildet ist. Mit anderen Worten bedeutet dies, dass die Federbügelanordnung an mindestens einem Ende bevorzugt an beiden Enden entlang der Längsachse beabstandet (jeweils) eine Einschnürung bzw. Einschlaufung umfasst in der die Federbügelanordnung mittel- und/oder unmittelbar mit der Trägerplatte in Wirkverbindung steht. Erfindungsgemäß ist der Kontakt in einem ersten Ende der Federbügelanordnung in Form einer Schwenklagerung ausgebildet, die die Federbügelanordnung in einem Lagerabschnitt aufnimmt und das Verschwenken der Federbügelanordnung um die Schwenkachse ermöglicht. In dem dem ersten Ende entlang der Längsachse gegenüberliegenden zweiten Ende stützt sich die Federbügelanordnung auf der Vorderseite der Trägerplatte in der Abstützfläche ab. Das zweite Ende umfasst erfindungsgemäß den Zungenabschnitt. Der Zungenabschnitts und/oder der Lagerabschnitt weisen verringerte Breitenerstreckung als der Zwischenabschnitt auf. Dies ermöglicht es erfindungsgemäß, dass die Federbügelanordnung in seiner Breitenerstreckung unmittelbar neben der Hochkante der Gebäudeöffnung (Ladeöffnung) angeordnet werden kann. Gleichzeitig werden durch die erfindungsgemäße Puffervorrichtung die aus dem Stand der Technik bekannten Vorteile einer aus Federstahl ausgebildeten Puffervorrichtung realisiert. Somit gewährt die Puffervorrichtung eine hohe Lebensdauer bei einem geringen Wartungsaufwand. In diesem Zusammenhang ist es besonders bevorzugt, wenn die Federbügelanordnung aus nicht mehr wie aus dem Stand der Technik bekannten Bandstahl sondern aus einer, bevorzugt aus Stahl ausgebildeten, Metallplatte geschnitten wird. Dies ermöglicht es Federbügelanordnung in einer Breitenerstreckung von über 160mm zu realisieren, um somit die Kraftaufnahme zu verbessern.

Eine Weiterbildung der Erfindung sieht vor, dass das Sicherungselement einen Axialanschlag zur Begrenzung der Gleitstrecke für einen den Zungenabschnitt entlang der Breitenachse überragenden Federbügelanschlagsabschnitt der Federbügelanordnung ausbildet. Dies ermöglicht es vorteilhaft, die Federbügelanordnung vor Beschädigung zu schützen, da sichergestellt werden kann, dass bei Kraftbeaufschlagung die Federbügelanordnung lediglich im elastischen Bereich verformbar ist. Ferner ermöglicht diese Weiterbildung, dass zur Anpassung der Pufferwirkung der erfindungsgemäßen Puffervorrichtung ein zwischen der Trägerplatte und der Federbügelanordnung bevorzugt vorgesehenes Pufferelement kleiner und damit kostengünstiger dimensioniert (ausgelegt) werden kann. Darüber hinaus ermöglicht eine derart ausgebildete Ausführungsform der Erfindung auch, dass die Federbügelanordnung eine geringere Dicke aufweisen kann, wodurch sich vorteilhaft die Materialkosten und das Gewicht der Puffervorrichtung reduzieren lässt.

In diesem Zusammenhang ist weiterbildend vorgesehen, wenn der Axialanschlag und der Federbügelanschlagsabschnitt zum Begrenzen der Gleitstrecke in einem nicht kraftbeaufschlagten, d. h. nicht von außen in Richtung der Trägerplatte niedergedrückten Zustand der Federbügelanordnung entlang der Längsachse um einen einer maximalen Gleitstreckenerstreckung entsprechenden Abstand aus einem Wertebereich von 0,5cm bis 10cm, bevorzugt von 0,5cm bis 8cm, beabstandet ausgebildet ist. Dies ermöglicht eine hohe Pufferwirkung auf einer für die Anwendung anpassbaren Pufferstrecke, wobei die Pufferstrecke die Weglänge umfasst, die die Federbügelanordnung zwischen der entspannten Position zur kraftbeaufschlagten unentspannten Position senkrecht zur Trägerplattenflächenerstreckung (entlang einer Tiefenachse) zurücklegt.

Eine Weiterbildung der Erfindung sieht vor, dass die Federbügelanordnung aus wenigstens zwei sich entlang der Breitenachse erstreckenden, bevorzugt im Hinblick auf eine sich senkrecht zu einer Flächenerstreckung der Trägerplatte erstreckenden und im montierten Zustand vertikalen Spiegelebene, spiegelsymmetrisch ausgebildeten Federbügeln besteht oder solche umfasst, wobei der Lagerabschnitt, der Zwischenabschnitt und der Zungenabschnitt jeweils von mindestens zwei der Federbügel ausgebildet wird. Bevorzugt werden der Lagerabschnitt, der Zwischenabschnitt und der Zungenabschnitt auch von sämtlichen Federbügeln der Federbügelanordnung ausgebildet. Dies ermöglicht es vorteilhaft die erfindungsgemäße Puffervorrichtung aus standardisierten Formbauteilen aufzubauen, die dann durch die Kombination von mehreren Federbügeln in Ihrer Breitenerstreckung anpassbar sind, ohne dabei von dem Grundgedanken der Erfindung abzuweichen.

Eine Weiterbildung der Erfindung ist auch besonders zweckmäßig, in der die Breitenerstreckung des Zwischenabschnitts und/oder mindestens eines Federbügels im Bereich des Zwischenabschnitts größer ist als 15cm, insbesondere gewählt ist zwischen 16cm und 32cm. Wie bereits erwähnt ist es in diesem Zusammenhang besonders bevorzugt, wenn die gesamte Federbügelanordnung und/oder wenigstens einer der die Federbügelanordnung ausbildenden Federbügel aus einer, bevorzugt aus Stahl ausgebildeten, Metallplatte, hergestellt wird, die zur Ausbildung eines der Federbügel dann entlang der Längsachse mechanisch zerteilt (geschnitten) wird.

Eine Weiterbildung der Erfindung sieht zudem vor, dass die Trägerplatte wenigstens ein, insbesondere an der Vorderseite der Trägerplatte angeordnetes bevorzugt stabförmiges bzw. langförmiges Versteifungselement umfasst, das sich entlang der Längsachse erstreckt und eine plastische Deformation entlang einer sich senkrecht zur Breitenachse und zur Längsachse erstreckenden Tiefenachse durch eine mechanische Verstärkung der Trägerplatte verhindert. Anders ausgedrückt ermöglicht das wenigstens eine Versteifungselement eine höhere Kraftaufnahme durch die Trägerplatte, wodurch diese bevorzugt auch entlang der Längsachse abschnittsweise, insbesondere über eine Ladekante, überstehend angeordnet werden kann. Das wenigstens eine Versteifungselement ermöglicht somit vorteilhaft das plastische Verformen der Trägerplatte auch bei einer hohen Kraftbeaufschlagung durch ein rückwärts an die Puffervorrichtung heranfahrendes LKW-Heck zu vermeiden. Weiterbildend kann das wenigstens eine Versteifungselement sich auch teilweise oder vollständig schräg zur Längserstreckung (und Längsachse) der Trägerplatte erstrecken.

Ferner sieht eine Weiterbildung vor, dass das wenigstens eine Versteifungselement entlang einer sich senkrecht zur Breitenachse und zur Längsachse erstreckenden Tiefenachse zwischen der Vorderseite der Trägerplatte und der entlang der Tiefenachse von dem wenigstens einem Versteifungselement beabstandeten Federbügelanordnung angeordnet ist. In anderen Worten ausgedrückt bedeutet dies, dass das wenigstens eine Versteifungselement in einem Bereich auf der Vorderseite der Trägerplatte angeordnet ist in der sich die Orthogonalprojektion der Federbügelanordnung auf der Trägerplatte erstreckt. Jedoch ist alternativ auch eine Ausführungsform vorgesehen in welcher das wenigstens eine Versteifungselement entlang der Breitenachse seitlich zu der Trägerplatte angeordnet ist, wobei das wenigstens eine Versteifungselement in diesem Zusammenhang in Bezug auf die Tiefenachse eine größere Dicke bzw. Tiefe aufweist als die Trägerplatte und diese auf der vom Gebäude abgewandten Vorderseite überragt. Bei einer derartigen Ausführungsform ist es dann besonders bevorzugt, wenn der Zwischenabschnitt der Federbügelanordnung die Breitenerstreckung der Trägerplatte überragt und somit das wenigstens eine, seitlich angeordnete Versteifungselement auch hier im Bereich der Orthogonalprojektion der Federbügelanordnung liegt.

Weiterbildend können auch zwei sich entlang der Längsachse erstreckende Versteifungselemente auf der Vorderseite der Trägerplatte oder seitlich zur Trägerplatte vorgesehen sein. Alternativ und/oder ergänzend ist es auch vorgesehen, dass das Versteifungselement einen U-Grundriss besitzt und sich somit entlang der Längsachse sowie der Breitenachse der Trägerplatte erstreckt.

Besonders bevorzugt ist eine Weiterbildung der Erfindung, bei welcher das wenigstens eine Versteifungselement sich entlang der Längsachse um mindestens 60% der Längserstreckung der Trägerplatte erstreckt, wobei in diesem Zusammenhang es besonders bevorzugt ist, wenn das wenigstens eine Versteifungselement im Bereich der Trägerplatte festgelegt ist, in welchem sich auch das obere Ende der Federbügelanordnung erstreckt. Dies gewährleistet eine mechanische Verstärkung der Trägerplatte in dem überstehenden oberen Abschnitt der Trägerplatte bei einer bevorzugt überstehenden Anordnung der Puffervorrichtung an einer Ladekante und bietet somit eine kostengünstige und materialsparende Möglichkeit die Puffervorrichtung zu verstärken, ohne die Notwendigkeit eines rückwärtigen Stützelements.

Besonders bevorzugt ist eine Weiterbildung der Erfindung, bei der die Trägerplatte auf einer von der Vorderseite der Trägerplatte abgewandten, bevorzugt zur Vorderseite parallel ausgebildeten, rückwärtigen Montageseite der Trägerplatte auf einer Abstandsplatte zur Beabstandung der Trägerplatte von einer Gebäudefläche angeordnet, insbesondere festgelegt, ist, wobei bevorzugt die Trägerplatte entlang der Längsachse im Bereich der Kraftaufnahmeelemente zu der Abstandsplatte übersteht. In diesem Zusammenhang ist es weiter bevorzugt, wenn die Ladeöffnung der LKW-Ladestation durch zwei entlang der Längsachse erstreckende Hochkanten sowie eine untere sich entlang der Breitenachse erstreckende Ladekante definiert wird, und die Trägerplatte dann zumindest abschnittsweise die horizontal ausgebildete Ladekante in eine vertikale Hochrichtung überragt. In anderen Worten ausgedrückt bedeutet dies, dass die Montageseite der Trägerplatte lediglich abschnittsweise direkt in Kontakt mit der Abstandsplatte steht. Dies ermöglicht eine vorteilhafte Erweiterung der erfindungsgemäßen Puffervorrichtung, da diese nun auch bei LKW-Ladestationen eingesetzt werden kann, deren Ladeöffnungen eine größere Breitenerstreckung als die Breitenerstreckung des LKW-Hecks aufweisen. Durch die Verwendung der Abstandsplatte kann dabei die Belastung im Bereich der Ladekante reduziert werden, wenn die die erfindungsgemäße Puffervorrichtung die Ladekante der LKW-Ladestation entlang der Längsachse überragt. In diesem Zusammenhang kann es dann vorgesehen sein, dass die erfindungsgemäße Puffervorrichtung durch ein rückwärtiges Stützelement zum Abstützen an einer horizontalen sich an die Ladekante anschließenden Gebäudefläche abstützt. Alternativ ist jedoch bevorzugt auch das Vorsehen des wenigstens einen Versteifungselementes seitlich auf der Trägerplatte oder bevorzugt auf der Vorderseite der Trägerplatte möglich. In beiden Fällen kann durch die Abstandsplatte die Belastung der Gebäudefläche im Bereich der Ladekante reduziert werden, um die LKW-Ladestation im Bereich der Ladekante vor Beschädigung durch eine zu große Kraftbeaufschlagung zu schützen. Dies ermöglicht es somit vorteilhaft, dass die LKW-Ladestation eine konstruktiv zusätzlich verstärkte Ladekannte benötigt. Bei bevorzugtem Einsatz des mindestens einen Versteifungselements kann auf das rückwärts Stützelement verzichtet werden.

Weiterbildend zu den zuvor beschriebenen Weiterbildungen der Erfindung ist es auch vorgesehen, dass entlang der Längsachse zwischen der Schwenklagerung und dem Sicherungselement wenigstens ein, bevorzugt elastisch oder plastisch deformierbares, Pufferelement in Bezug auf die Tiefenachse zwischen der Vorderseite der Trägerplatte und der Rückseite der Federbügelanordnung angeordnet ist. Das zusätzliche Pufferelement ermöglicht es vorteilhaft die Pufferwirkung der erfindungsgemäßen Puffervorrichtung zu verbessern, da die Pufferwirkung durch das zusätzliche Pufferelement über einen großen Bereich an den individuellen Anwendungsfall anpassbar wird und die Pufferwirkung insbesondere verstärkbar ist. Dies ermöglicht weiterbildend auch Kostenoptimierungen, da die Dicke der Federbügelanordnung verringert werden kann. Neben einem deutlich geringeren Gewicht der gesamten Puffervorrichtung bietet das auch den Vorteil, dass sich dünner ausgebildete Federbügelanordnungen wesentlich einfacher und damit kostengünstiger mechanisch herstellen lassen. Ferner besteht auch die Möglichkeit, dass die Pufferwirkung einer derart ausgebildeten Puffervorrichtung durch unterschiedlich ausgebildete Pufferelemente beliebig anpassbar ist. In diesem Zusammenhang ist es dann auch denkbar, dass die Pufferwirkung der erfindungsgemäßen Puffervorrichtung durch ein zusätzlich eingeführtes oder auch austauschbares Pufferelement im Nachhinein anpassbar ist.

Die Erfindung führt auch auf ein System umfassend wenigstens eine erfindungsgemäße Puffervorrichtung sowie eine eine Gebäudefläche umfassende LKW-Ladestation, wobei die Gebäudefläche zur Ausbildung einer Ladeöffnung eine horizontale Ladekante aufweist, die beidseitig durch jeweils eine vertikale Hochkante begrenzt ist. Die Puffervorrichtung ist an der Gebäudefläche, bevorzugt mit vertikal ausgerichteter Längsachse, angeordnet. In diesem Zusammenhang ist es besonders vorteilhaft, wenn sich der Zwischenabschnitt (entlang der Breitenachse) mit seiner Breitenerstreckung bis unmittelbar an die vertikale Hochkante der Ladeöffnung erstreckt.

Zudem umfasst die Erfindung auch eine Weiterbildung dieses Systems, bei welchem die Trägerplatte der erfindungsgemäßen Puffervorrichtung wenigstens ein Versteifungselement umfasst, wobei die Puffervorrichtung derart an der Gebäudefläche angebracht ist, dass sich das Versteifungselement in Bezug auf die Längsachse beidseitig zur Ladekante der Ladeöffnung erstreckt. Dies ermöglicht bevorzugt, die Trägerplatte derart zu versteifen, dass diese trotz dem entlang der Längsachse abschnittsweisen Überragen der Ladekante bei einer Kraftbeaufschlagung in Richtung der Tiefenachse durch ein rückwärts auf die Puffervorrichtung auffahrendes LKW-Heck nicht entlang der Tiefenachse verformbar ist.

In diesem Zusammenhang sieht eine Weiterbildung des Systems vor, dass die Trägerplatte der Puffervorrichtung mittels einer Abstandsplatte an der Gebäudefläche befestigt ist. Mit anderen Worten ausgedrückt, bedeutet dies, dass zwischen der Gebäudefläche und der Trägerplatte die Abstandsplatte angeordnet ist, wobei die Abstandsplatte entlang der Längsachse von der Ladekante beabstandet ist, und die Trägerplatte der Puffervorrichtung die Abstandsplatte entlang der Längsachse überragt. Dies ermöglicht es vorteilhaft, die Belastung der Gebäudefläche bei Kraftbeaufschlagung der Puffervorrichtung im Bereich der Ladekante zu reduzieren. Zudem ist es bevorzugt, wenn das auf der Trägerplatte angeordnete Versteifungselement die Abstandsplatte entlang der Längsachse abschnittsweise überragt. Alternativ kann die abschnittsweise über die Ladekante überstehende Trägerplatte auch durch ein Stützelement verstärkt werden, das sich an der horizontalen unmittelbar an der Ladekante angrenzenden Gebäudefläche abstützt. Beide vorgenannten alternativen Ausführungsformen ermöglichen vorteilhaft, die Trägerplatte der Puffervorrichtung bei einer Kraftbeaufschlagung entlang der Tiefenachse mechanisch zu verstärken und verhindern somit, eine elastische oder plastische Deformation der Trägerplatte bei Kraftbeaufschlagung. Ferner führt die Beabstandung der Abstandsplatte von der Ladekante in Längsrichtung dazu, dass bei der Kraftbeaufschlagung der Puffervorrichtung die auf das Gebäude übermittelte Kraft nicht unmittelbar im Bereich der Ladekante auf das Gebäude einwirkt, wodurch eine Beschädigung der Ladekante bzw. der Gebäudefläche im Bereich der Ladekante vermieden wird. Dies ist besonders vorteilhaft in Zusammenhang mit Ladekanten, die aus Kostengründen nicht verstärkt ausgebildet wurden.

Im Ergebnis ermöglicht die erfindungsgemäße Puffervorrichtung auf überraschend einfache und effiziente Weise die aus dem Stand der Technik bekannte Puffervorrichtung zu verbessern und weiterzuentwickeln. Dies ermöglicht einen breiten Einsatz der erfindungsgemäßen Puffervorrichtung sowie die aus dem Stand der Technik bekannten Nachteile auf überraschend einfacher Weise zu überwinden.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine perspektivische Ansicht einer bevorzugten Ausführungsform der erfindungsgemäßen Puffervorrichtung, in
- Fig. 2: eine Frontansicht der aus Fig. 1 bekannten erfindungsgemäßen Puffervorrichtung, in
- Fig. 3: eine Seitenansicht der erfindungsgemäßen Puffervorrichtung im montierten Zustand mittels einer Abstandsplatte.

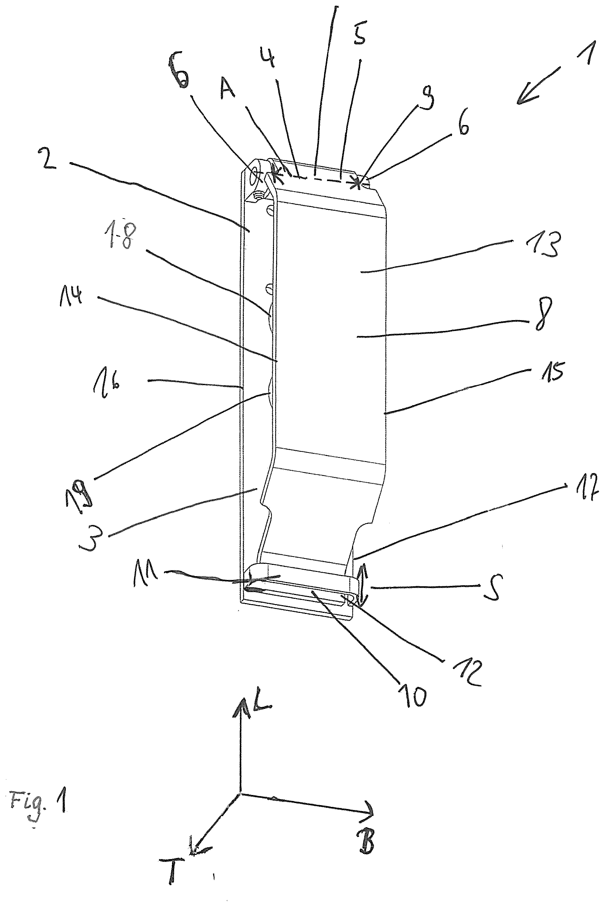

In Fig. 1 zeigt eine erfindungsgemäße Puffervorrichtung 1 in einer perspektivischen Seitenansicht. Die erfindungsgemäße Puffervorrichtung 1 umfasst eine Trägerplatte 2 aus Stahl, wobei auf einer Vorderseite 3 der Trägerplatte 2 an einem ersten, in Bezug auf die Längsachse L, oberen Ende der Trägerplatte 2 eine eine Schwenkachse 4 umfassende Schwenklagerung 5 angeordnet ist. Die Schwenklagerung 5 weist zwei Kraftaufnahmeelemente 6 auf, die entlang einer Breitenachse B um einen Lagerabstand A voneinander beabstandet sind. Zwischen den Kraftaufnahmeelementen 6 wird ein Lagerabschnitt 7 einer, vorliegend einen einzigen Federbügel aufweisenden Federbügelanordnung 8 aufgenommen. Die Federbügelanordnung 8 ist um die Schwenkachse 4 mittels eines Lagerbolzen 9 schwenkbar an den Kraftaufnahmeelementen 6 angeordnet und erstreckt sich entlang der Längsachse L zu einem zweiten Ende. In dem zweiten Ende bildet die Federbügelanordnung 8 einen Zungenabschnitt 10 aus und stützt sich auf der Vorderseite 3 der Trägerplatte 2 ab, wobei die Federbügelanordnung 8 im montierten Zustand bei Kraftbeaufschlagung durch ein rückwärts auf die Federbügelanordnung 8 entlang einer Tiefenachse T auffahrendes LKW-Heck durch elastische Deformation auf der Vorderseite 3 der Trägerplatte 2 entlang einer Gleitstrecke S in Richtung der Längsachse L gleitet. Zur Vermeidung eines Abfederns der Federbügelanordnung 8 senkrecht zur Trägerplattenvorderseitenflächenerstreckung befindet sich in Bezug auf die Tiefenachse T vor der Trägerplatte 2 ein bügelartig ausgebildetes Sicherungselement 11, welches randseitig an der Vorderseite 3 der Trägerplatte 2 festgelegt ist und eine Aufnahmeöffnung 12 für den Zungenabschnitt 10 ausbildet, in die der Zungenabschnitt 10 entlang der Längsachse L hineinragt. In Bezug auf die Längsachse L bildet die Federbügelanordnung 8 zwischen dem Lagerabschnitt 7 und dem Zungenabschnitt 10 ein Zwischenabschnitt 13 aus. Bei der dargestellten Ausführungsform der Erfindung überragt der Zwischenabschnitt 13 die Breitenerstreckung des Lagerabschnitts 7 sowie des Zungenabschnitts 10, wobei die linke Seitenkante 14 des Zwischenabschnitts 13 nicht nur parallel zu der linken Seitenkante 16 der Trägerplatte 2 verläuft, sondern auch beiden Seitenkanten (14, 16) eine feste Bezugskoordinate auf der Breitenachse B zugeordnet werden kann. Ferner verläuft auch die rechte Seitenkante 15 des Zwischenabschnitts 13 parallel zu der rechten Seitenkante 17 der Trägerplatte 2, wobei auch diesen beiden Seitenkanten (15, 17) eine feste Bezugskoordinate auf der Breitenachse B zugeordnet werden kann. In anderen Worten ausgedrückt bedeutet dies, dass die Breitenerstreckung der Federbügelanordnung 8 im Zwischenabschnitt 13 der Breitenerstreckung der Trägerplatte 2 entspricht.

Zur Verbesserung der Pufferwirkung umfasst die Puffervorrichtung 1 zudem ein erstes Pufferelemente 18 sowie ein zweites Pufferelement 19, jeweils ausgebildet aus einem Elastomer umfassenden Material, die in Bezug auf die Längsachse L zwischen der Schwenklagerung 5 und dem Sicherungselement 11 zwischen der Vorderseite 3 der Trägerplatte 2 und der Rückseite der Federbügelanordnung 8 angeordnet sind.

Im Betrieb ermöglicht die erfindungsgemäße Puffervorrichtung 1 durch elastisches Verformen der Federbügelanordnung 8 eine Energieaufnahme bei Kontakt mit einem rückwärts an die LKW-Ladestation auffahrenden LKW-Hecks. Dabei gleitet die Federbügelanordnung 8 auf der Vorderseite 3 der Trägerplatte 2 entlang der Gleitstrecke S, wobei auch zur anwendungsabhängigen Anpassung der Pufferwirkung der erfindungsgemäßen Puffervorrichtung 1 die zwischen der Vorderseite 3 der Trägerplatte 2 angeordneten beiden Pufferelemente (18, 19) kraftbeaufschlagt werden

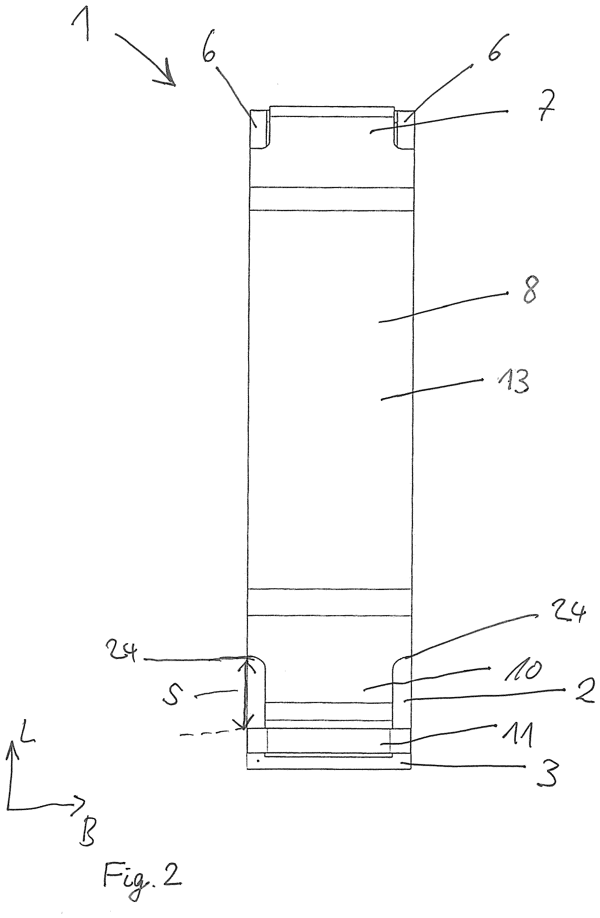

Fig. 2 zeigt die aus Fig. 1 bekannte Ausführungsform der erfindungsgemäßen Puffervorrichtung in einer Frontansicht. Darin ist deutlich die Federbügelanordnung 8 zu erkennen, die den Lagerabschnitt 7, den Zwischenabschnitt 13 sowie den Zungenabschnitt 10 umfasst. In der Frontansicht wird auch deutlich, dass die Breitenerstreckung des Zwischenabschnitts 13 die Breitenerstreckung des Zungenabschnitts 10 sowie des Lagerabschnitts 7 überragt. Im Bereich des Lagerabschnitts 7 befinden sich die beiden Kraftaufnahmeelemente 6 zwischen denen der Lagerabschnitt 7 der Federbügelanordnung 8 aufgenommen ist und über die die Federbügelanordnung 8 mit der Trägerplatte 2 in Wirkverbindung steht. Auch im Bereich des Zungenabschnitts 10 steht die Federbügelanordnung 8 in Kontakt mit der Trägerplatte 2, da sich die Federbügelanordnung 8 hier auf der Vorderseite 3 der Trägerplatte 2 abstützt, um bei Kraftbeaufschlagung der Federbügelanordnung 8 entlang der Längsachse L im Bereich der Gleitstrecke S zu gleiten. Aus der in Fig. 2 dargestellten Frontansicht der erfindungsgemäßen Puffervorrichtung 1 wird auch deutlich, dass das Sicherungselement 11 beidseitig einen entlang der Längsachse L wirkenden Axialanschlag zur Begrenzung der Gleitstrecke S für einen den Zungenabschnitts 10 entlang der Breitenachse B überragenden Federbügelanschlagsabschnitt 24 ausbildet. Dies gewährleistet vorteilhaft, dass die Federbügelanordnung 8 auch bei hoher Kraftbeaufschlagung sicherlich nur im elastischen Bereich deformiert wird.

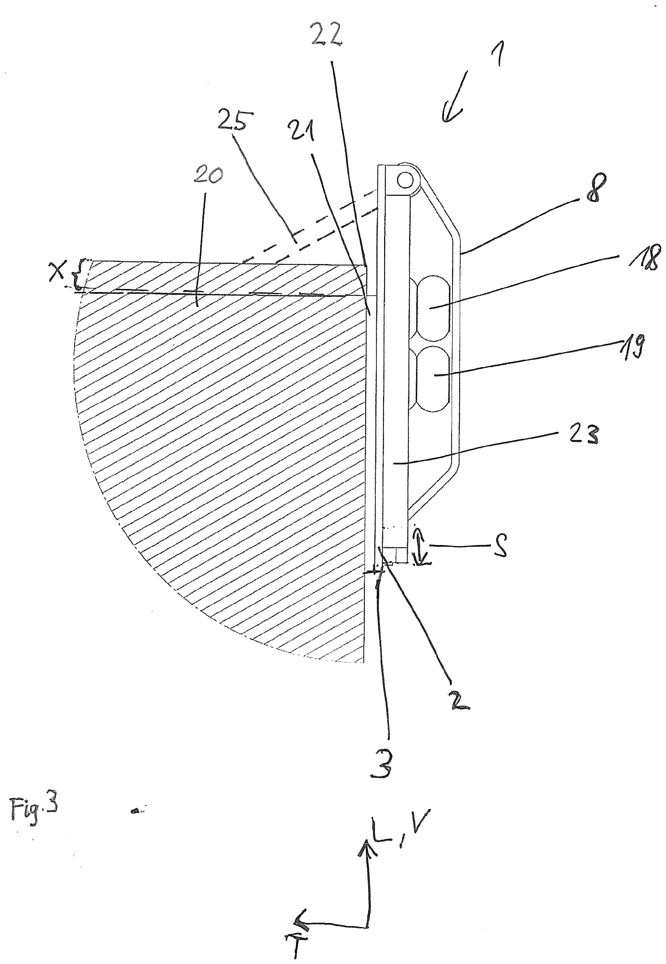

Fig. 3 zeigt eine erfindungsgemäße Puffervorrichtung 1 im montierten Zustand an einer LKW-Verladerampe 20. Die erfindungsgemäße Puffervorrichtung 1 ist mittels einer Abstandsplatte 21 an der Gebäudefläche der LKW-Ladestation festgelegt, wobei die Längsachse L der Vertikalen V entspricht. Dabei überragt die Trägerplatte 2 in Längsrichtung die Ladekante 22 der LKW-Verladerampe 20 abschnittsweise. Aus der dargestellten Seitenansicht lässt sich erkennen, dass die Abstandsplatte 21 in Bezug auf die Längsachse L von der Ladekante 22 durch einen Abstand X beabstandet an der Gebäudefläche angeordnet ist, um die Krafteinwirkung auf die Gebäudefläche im Bereich der Ladekante 22 bei Kraftbeaufschlagung der erfindungsgemäßen Puffervorrichtung 1 zu reduzieren. Dies ermöglicht es vorteilhaft, dass die Ladekante 22 der LKW-Ladestationen vor Beschädigung durch zu große Kraftbeaufschlagung geschützt wird. Ferner sind auf der Vorderseite 3 der Trägerplatte 2 entlang der Längsachse L zwei stabförmige Versteifungselement 23 zur Verbesserung der Stabilität der Trägerplatte 2 vorgesehen, die derart auf der Trägerplatte 2 angeordnet sind, dass die beiden Versteifungselemente 23 entlang der Längsachse L die Abstandsplatte 21 abschnittsweise überragen. Durch die stabförmigen Versteifungselemente 23 kann die Formstabilität der Puffervorrichtung 1 verbessert werden. Als Alternative zu den beiden Versteifungselementen 23 ist in Fig. 3 gestrichelt ein rückwärtiges Stützelement 25 eingezeichnet, das bei Kraftbeaufschlagung in Richtung der Tiefenachse T zur Steigerung der mechanischen Belastbarkeit der Trägerplatte 2 dient, indem es in dem entlang der Längsachse L abschnittsweise überstehenden Bereich der Trägerplatte 2 angeordnet ist. Zur Vermeidung einer plastischen Deformation stützt sich die Trägerplatte 2 somit auf der horizontalen Gebäudefläche ab. Nachteilig dabei ist, dass die Ladefläche der LKW-Ladestation durch das Stützelement 25 verkleinert wird. Ferner bildet das montierte Stützelement 25 eine Stolperfalle für Bedienpersonal aus.

### Bezugszeichen

- 1: Puffervorrichtung
- 2: Trägerplatte
- 3: Vorderseite der Trägerplatte
- 4: Schwenkachse
- 5: Schwenklagerung
- 6: Kraftaufnahmeelemente
- 7: Lagerabschnitt
- 8: Federbügelanordnung
- 9: Lagerbolzen
- 10: Zungenabschnitt
- 11: Sicherungselement
- 12: Aufnahmeöffnung
- 13: Zwischenabschnitt
- 14: linke Seitenkante des Zwischenabschnitts
- 15: rechte Seitenkante des Zwischenabschnitts
- 16: linke Seitenkante der Trägerplatte
- 17: rechte Seitenkante der Trägerplatte
- 18: erstes Pufferelement
- 19: zweites Pufferelement
- 20: LKW-Verladerampe
- 21: Abstandsplatte
- 22: Ladekante
- 23: Versteifungselement
- 24: Federbügelanschlagsabschnitt
- 25: Stützelement

- A: Lagerabstand
- S: Gleitstrecke
- X: Kantenabstand

## Patentansprüche

1. Puffervorrichtung (1) zur Montage im Bereich einer eine Ladeöffnung umfassenden LKW-Ladestation, insbesondere einer Verladerampe (20), zur Energieabsorption bei Kontakt mit einem rückwärts an die LKW-Ladestation auffahrenden LKW-Heck, umfassend wenigstens eine sich entlang einer Längsachse (L) und einer senkrecht dazu orientierten Breitenachse (B) erstreckenden, mindestens einen Federbügel aufweisenden Federbügelanordnung (8), die im Bereich eines ersten Endes in einem Lagerabschnitt (7) um eine sich parallel zur Breitenachse (B) orientierte Schwenkachse (4) einer Schwenklagerung (5) auslenkbar gelagert und an einer Vorderseite (3) einer zwei entlang der Breitenachse (B) zueinander beabstandete, bevorzugt parallele, Seitenkanten (16; 17) umfassenden Trägerplatte (2) festgelegt ist, wobei die Schwenklagerung (5) zwei entlang der Breitenachse (B) um einen Lagerabstand (A) beabstandete Kraftaufnahmeelemente (6) aufweist, zwischen denen der Lagerabschnitt (7) aufgenommen ist und die bevorzugt einen die Schwenkachse (4) definierenden Lagerbolzen (9) tragen, wobei die Federbügelanordnung (8) sich im Bereich eines von dem ersten Ende entlang der Längsachse (L) beabstandeten zweiten Endes mit einer Abstützfläche auf der Vorderseite (3) der Trägerplatte (2) abstützt, um bei elastischer Deformation entlang der Längsachse (L) auf der Trägerplatte (2) entlang einer Gleitstrecke (S) zu gleiten und wobei die Federbügelanordnung (8) im Bereich des zweiten Endes durch ein, bevorzugt bügelförmiges, eine Aufnahmeöffnung für einen Zungenabschnitt (10) der Federbügelanordnung (8) begrenzendes Sicherungselement (11) gegen ein Abfedern senkrecht zu einer Trägerplattenvorderseitenflächenerstreckung gesichert ist,
**dadurch gekennzeichnet,**
**dass** die Federbügelanordnung (8) in einem entlang der Längsachse (L) zwischen dem Lagerabschnitt (7) und dem Zungenabschnitt (10) ausgebildeten Zwischenabschnitt (13) eine größere entlang der Breitenachse (B) orientierte Breitenerstreckung aufweist als in dem Lagerabschnitt (7) und/oder als in dem Zungenabschnitt (10), insbesondere entlang der Breitenachse (B) bis zu mindestens einer der Seitenkanten (16; 17) der Trägerplatte (2) oder darüber hinaus.

2. Puffervorrichtung nach Anspruch 1,
**dadurch gekennzeichnet,**
**dass** das Sicherungselement (11) einen Axialanschlag zur Begrenzung der Gleitstrecke (S) für einen den Zungenabschnitt (10) entlang der Breitenachse (B) überragenden Federbügelanschlagsabschnitt (24) der Federbügelanordnung (8) ausbildet.

3. Puffervorrichtung nach Anspruch 2,
**dadurch gekennzeichnet,**
**dass** der Axialanschlag und der Federbügelanschlagsabschnitt (24) zum Begrenzen der Gleitstrecke (S) in einem nicht kraftbeaufschlagten Zustand der Federbügelanordnung (8) entlang der Längsachse (L) um einen einer maximalen Gleitstreckenerstreckung entsprechenden Abstand, bevorzugt aus einem Wertebereich zwischen 0,5cm und 10cm, weiter bevorzugt zwischen 0,5cm und 8cm, beabstandet sind

4. Puffervorrichtung nach einem der vorhergehenden Ansprüche,
**dadurch gekennzeichnet,**
**dass** die Federbügelanordnung (8) wenigstens zwei entlang der Breitenachse (B) angeordnete, bevorzugt spiegelsymmetrisch ausgebildete Federbügel aufweist, wobei der Lagerabschnitt (7), der Zwischenabschnitt (13) und der Zungenabschnitt (10) jeweils von mindestens zwei der Federbügel, insbesondere von sämtlichen Federbügeln, gebildet sind.

5. Puffervorrichtung nach einem der vorhergehenden Ansprüche,
**dadurch gekennzeichnet,**
**dass** die Breitenerstreckung des Zwischenabschnitts (13) und/oder mindestens eines der Federbügel im Bereich des Zwischenabschnitts (13) größer ist als 15cm, insbesondere gewählt ist zwischen 16cm und 32cm.

6. Puffervorrichtung nach einem der vorhergehenden Ansprüche,
**dadurch gekennzeichnet,**
**dass** an der Trägerplatte (2) ein, insbesondere an der Vorderseite (3) der Trägerplatte (2) angeordnetes, sich entlang der Längsachse (L) erstreckendes Versteifungselement (23) vorgesehen ist zum Verhindern einer plastischen Deformation entlang einer sich senkrecht zur Breitenachse (B) und zur Längsachse (L) erstreckenden Tiefenachse (T).

7. Puffervorrichtung nach Anspruch 6,
**dadurch gekennzeichnet,**
**dass** das mindestens eine, bevorzugt stabförmige, Versteifungselement (23) entlang einer sich senkrecht zur Tiefenachse (T), bevorzugt zwischen der Vorderseite (3) der Trägerplatte (2) und der entlang der Tiefenachse (T) von dem Versteifungselement (23) beabstandeten Federbügelanordnung (8) angeordnet ist und/oder dass das Versteifungselement (23) entlang der Breitenachse (B) seitlich zu der Trägerplatte (2) angeordnet ist, wobei das Versteifungselement (23) entlang der Tiefenachse (T) die Dicke der Trägerplatte (2) überragt.

8. Puffervorrichtung nach Anspruch 6 oder Anspruch 7,
**dadurch gekennzeichnet,**
**dass** die Trägerplatte (2) mindestens zwei entlang der Breitenachse (B) voneinander beabstandete Versteifungselemente (23) angeordnet sind.

9. Puffervorrichtung nach einem der Ansprüche 6 bis 8,
**dadurch gekennzeichnet,**
**dass** das Versteifungselement (23) entlang der Längsachse (L) mindestens 60% der Längserstreckung der Trägerplatte (2) umfasst.

10. Puffervorrichtung nach einem der vorhergehenden Ansprüche,
**dadurch gekennzeichnet,**
**dass** die Trägerplatte (2) auf einer zur Vorderseite (3) der Trägerplatte (2) abgewanten, rückwärtigen Montageseite der Trägerplatte (2) auf einer Abstandsplatte (21) zur Beabstandung der Trägerplatte (2) von einer Gebäudefläche festgelegt ist, wobei bevorzugt die Trägerplatte (2) entlang der Längsachse (L) im Bereich der Kraftaufnahmeelemente (6) zu der Abstandsplatte in einer vertikalen Hochrichtung übersteht.

11. Puffervorrichtung nach einem der vorhergehenden Ansprüche,
**dadurch gekennzeichnet,**
**dass** entlang der Längsachse (L) zwischen der Schwenklagerung (5) und dem Sicherungselement (11) wenigstens ein bevorzugt elastisch oder plastisch deformierbares Pufferelement (18, 19) zwischen der Vorderseite der Trägerplatte und einer der Vorderseite (3) der Trägerplatte (2) zugewandten Rückseite der Federbügelanordnung (8) angeordnet ist.

12. System umfassend wenigstens eine Puffervorrichtung (1), die nach einem der Ansprüche 1 bis 11 ausgebildet ist sowie eine eine Gebäudefläche umfassende LKW-Ladestation, wobei die Gebäudefläche zur Ausbildung einer Ladeöffnung eine horizontale Ladekante (22) aufweist, die bevorzugt beidseitig durch jeweils eine vertikale Hochkante begrenzt ist, wobei die Puffervorrichtung an der Gebäudefläche angeordnet ist, bevorzugt mit vertikal ausgerichteter Längsachse.

13. System nach Anspruch 12,
**dadurch gekennzeichnet,**
**dass** an der Trägerplatte (2) wenigstens ein Versteifungselement (23) angeordnet ist, wobei die Puffervorrichtung (1) derart an der Gebäudefläche angeordnet ist, dass sich das Versteifungselement (23) beidseitig entlang der Längsachse (L) zu der Ladekante (22) erstreckt.

14. System nach Anspruch 12 oder Anspruch 13,
**dadurch gekennzeichnet,**
**dass** zwischen der Gebäudefläche und der Trägerplatte (2) eine Abstandsplatte (21) angeordnet ist, wobei die Abstandplatte (21) entlang der Längsachse (L) von der Ladekante (22) beabstandet ist.

15. System nach Anspruch 14,
**dadurch gekennzeichnet,**
**dass** das Versteifungselement (23) der Trägerplatte (2) nach oben entlang der Vertikalen (V) die Abstandsplatte (21) entlang der Längsachse (L) abschnittsweise überragt oder dass an der rückwärtigen Montageseite der Trägerplatte (2) in dem zur Abstandsplatte (21) überstehenden Bereich ein rückwärtiges Stützelement angeordnet ist, zum Abstützen der Trägerplatte (2) am Gebäude, insbesondere an einer an die Ladekante (22) angrenzenden horizontalen Gebäudefläche.

## Claims

1. A buffer device (1) for being installed in the area of a truck loading station, in particular a loading ramp (20), comprising a loading opening in order to absorb energy when coming into contact with a truck rear end driving backward against the truck loading station, the buffer device (1) comprising at least one spring clip assembly (8) extending along a longitudinal axis (L) and a width axis (B) perpendicular thereto, the spring clip assembly (8) having at least one spring clip and being mounted in such a manner in a bearing portion (7) in the area of a first end that it can be moved about a pivot axis (4) of a pivot bearing (5), which is oriented parallel to the width axis (B), and being fixed to a front (3) of a support plate (2) comprising two preferably parallel side edges (16; 17) spaced apart along the width axis (B), the pivot bearing (5) having two force absorber elements (6) which are spaced apart by a bearing distance (A) along the width axis (B) and between which the bearing portion (7) is accommodated and which preferably support a bearing bolt (9) defining the pivot axis (4), the spring clip assembly (8) being supported on the front (3) of the support plate (2) with a support surface in the area of a second end, which is spaced apart from the first end along the longitudinal axis (L), in order to slide along a sliding distance (S) on the support plate (2) when it is elastically deformed along the longitudinal axis (L), and the spring clip assembly (8) being secured against springing off in a direction perpendicular to a support plate front surface dimension in the area of the second end by a preferably bow-shaped securing element (11), which defines a receiving opening for a tongue portion (10) of the spring clip assembly (8),
**characterized in that**
the spring clip assembly (8) has a greater width along the width axis (B) in an intermediate portion (13) formed between the bearing portion (7) and the tongue portion (10) than in the bearing portion (7) and/or in the tongue portion (10), in particular along the width axis (B) up to at least one of the side edges (16; 17) of the support plate (2) or beyond.

2. The buffer device according to claim 1,
**characterized in that**
the securing element (11) forms an axial stop for limiting the sliding distance (S) for a spring clip stop portion (24) of the spring clip assembly (8), the spring clip stop portion (24) protruding over the tongue portion (10) along the width axis (B).

3. The buffer device according to claim 2,
**characterized in that**
the axial stop and the spring clip stop portion (24) for limiting the sliding distance (S) are spaced apart along the longitudinal axis (L) by a distance corresponding to a maximum sliding distance, which is preferably from a value range between 0.5 cm and 10 cm, further preferably between 0.5 cm and 8 cm, when the spring clip assembly (8) is relaxed.

4. The buffer device according to any one of the preceding claims,
**characterized in that**
the spring clip assembly (8) has at least two preferably mirror-symmetrical spring clips disposed along the width axis (B), the bearing portion (7), the intermediate portion (13) and the tongue portion (10) each being formed by at least two of the spring clips, in particular by all spring clips.

5. The buffer device according to any one of the preceding claims,
**characterized in that**
the width of the intermediate portion (13) and/or at least one of the spring clips in the area of the intermediate portion (13) is greater than 15 cm, in particular selected between 16 cm and 32 cm.

6. The buffer device according to any one of the preceding claims,
**characterized in that**
a stiffening element (23) is provided on the support plate (2), the stiffening element (23) being in particular disposed on the front (3) of the support plate (2) and extending along the longitudinal axis (L) and serving to prevent plastic deformation along a depth axis (T), which is perpendicular to the width axis (B) and the longitudinal axis (L).

7. The buffer device according to claim 6,
**characterized in that**
the at least one stiffening element (23), which is preferably rod-shaped, extends along a depth axis (T), which is perpendicular to the width axis (B) and the longitudinal axis (L), and is preferably disposed between the front (3) of the support plate (2) and the spring clip assembly (8), which is spaced apart from the stiffening element (23) along the depth axis (T), and/or that the stiffening element (23) is disposed laterally to the support plate (2) along the width axis (B), the stiffening element (23) protruding over the thickness of the support plate (2) along the depth axis (T).

8. The buffer device according to claim 6 or claim 7,
**characterized in that**
at least two stiffening elements (23), which are spaced apart from each other along the width axis (B), are disposed on the support plate (2).

9. The buffer device according to any one of claims 6 to 8,
**characterized in that**
the stiffening element (23) comprises at least 60 % of the length of the support plate (2) along the longitudinal axis (L).

10. The buffer device according to any one of the preceding claims,
**characterized in that**
the support plate (2) is fixed to a spacer plate (21) for spacing the support plate (2) apart from a building surface on a rear mounting side of the support plate (2), which faces away from the front (3) of the support plate (2), the support plate (2) preferably protruding over the spacer plate in a vertical direction along the longitudinal axis (L) in the area of the force absorber elements (6).

11. The buffer device according to any one of the preceding claims,
**characterized in that**
along the longitudinal axis (L) between the pivot bearing (5) and the securing element (11), at least one buffer element (18, 19), which is preferably elastically or plastically deformable, is disposed between the front of the support plate and a rear of the spring clip assembly (8), which faces the front (3) of the support plate (2).

12. A system comprising at least one buffer device (1) configured according to any one of claims 1 to 11 and a truck loading station comprising a building surface, the building surface having a horizontal loading sill (22) for forming a loading opening, the loading sill (22) preferably being limited by a vertical edge on either side, the buffer device being disposed on the building surface, preferably with the longitudinal axis oriented vertically.

13. The system according to claim 12,
**characterized in that**
at least one stiffening element (23) is disposed on the support plate (2), the buffer device (1) being disposed on the building surface in such a manner that the stiffening element (23) extends toward the loading sill (22) along the longitudinal axis (L) on both sides.

14. The system according to claim 12 or claim 13,
**characterized in that**
a spacer plate (21) is disposed between the building surface and the support plate (2), the spacer plate (21) being spaced apart from the loading sill (22) along the longitudinal axis (L).

15. The system according to claim 14,
**characterized in that**
the stiffening element (23) of the support plate (2) partially protrudes upward over the spacer plate (21) in the vertical direction (V) along the longitudinal axis (L) or that a rear support element is disposed on the rear mounting side of the support plate (2) in the area protruding over the spacer plate (21), the support element serving to support the support plate (2) on the building, in particular on a horizontal building surface adjacent to the loading sill (22).

## Revendications

1. Dispositif de tampon (1) destiné à être monté dans la zone d'une station de chargement de camion, notamment une rampe de chargement (20), comprenant une ouverture de chargement afin d'absorber de l'énergie lors du contact avec un arrière de camion tamponnant la station de chargement de camion en arrière, le dispositif de tampon (1) comprenant au moins un ensemble d'étriers à ressort (8) s'étendant le long d'un axe longitudinal (L) et d'un axe de largeur (B) perpendiculaire à celui-ci, l'ensemble d'étriers à ressort (8) ayant au moins un étrier à ressort et étant monté de telle manière dans une partie de palier (7) dans la zone d'une première extrémité qu'il peut être tourné autour d'un axe de pivotement (4) d'un palier de pivotement (5), qui est orienté parallèlement à l'axe de largeur (B), et étant fixé à un côté avant (3) d'une plaque de support (2) comprenant deux bords latéraux (16 ; 17), qui sont de préférence parallèles et qui sont espacés l'un de l'autre le long de l'axe de largeur (B), le palier de pivotement (5) ayant deux éléments d'absorption de force (6) qui sont espacés l'un de l'autre d'une distance de palier (A) le long de l'axe de largeur (B) et entre lesquels la partie de palier (7) est logée et qui supportent de préférence un boulon de palier (9) définissant l'axe de pivotement (4), l'ensemble d'étriers à ressort (8) s'appuyant sur le côté avant (3) de la plaque de support (2) avec une surface de support dans la zone d'une deuxième extrémité, qui est espacée de la première extrémité le long de l'axe longitudinal (L), afin de glisser le long d'une distance de glissement (S) sur la plaque de support (2) quand il est déformé élastiquement le long de l'axe longitudinal (L), et l'ensemble d'étriers à ressort (8) étant empêché de sauter perpendiculairement à une dimension de surface de côté avant de plaque de support dans la région de la deuxième extrémité par un élément de sécurité (11), qui est de préférence en forme d'arc et qui définit une ouverture de réception pour une partie de languette (10) de l'ensemble d'étriers à ressort (8),
**caractérisé en ce que**
l'ensemble d'étriers à ressort (8) a une largeur plus grande le long de l'axe de largeur (B) dans une partie intermédiaire (13) formée entre la partie de palier (7) et la partie de languette (10) que dans la partie de palier (7) et/ou dans la partie de languette (10), notamment le long de l'axe de largeur (B) jusqu'à au moins un des bords latéraux (16 ; 17) de la plaque de support (2) ou au-delà.

2. Dispositif de tampon selon la revendication 1,
**caractérisé en ce que**
l'élément de sécurité (11) forme une butée axiale pour limiter la distance de glissement (S) pour une partie de butée d'étrier à ressort (24) de l'ensemble d'étriers à ressort (8), la partie de butée d'étrier à ressort (24) dépassant la partie de languette (10) le long de l'axe de largeur (B).

3. Dispositif de tampon selon la revendication 2,
**caractérisé en ce que**
la butée axiale et la partie de butée d'étrier à ressort (24) pour limiter la distance de glissement (S) sont espacées le long de l'axe longitudinal (L) d'une distance correspondant à une distance de glissement maximale, qui est de préférence dans une gamme de valeurs entre 0,5 cm et 10 cm, plus préférentiellement entre 0,5 cm et 8 cm, quand l'ensemble d'étriers à ressort (8) est détendu.

4. Dispositif de tampon selon l'une quelconque des revendications précédentes,
**caractérisé en ce que**
l'ensemble d'étriers à ressort (8) a au moins deux étriers à ressort,
qui sont de préférence symétriques et qui sont disposés le long de l'axe de largeur (B), la partie de palier (7), la partie intermédiaire (13) et la partie de languette (10) étant formées chacune par au moins deux des étriers à ressort, de préférence par tous les étriers à ressort.

5. Dispositif de tampon selon l'une quelconque des revendications précédentes,
**caractérisé en ce que**
la largeur de la partie intermédiaire (13) et/ou d'au moins un des étriers à ressort dans la région de la partie intermédiaire (13) est supérieure à 15 cm, notamment sélectionnée entre 16 cm et 32 cm.

6. Dispositif de tampon selon l'une quelconque des revendications précédentes,
**caractérisé en ce**
**qu'**un élément raidisseur (23) est disposé sur la plaque de support (2), notamment sur le côté avant (3) de la plaque de support (2), l'élément raidisseur (23) s'étendant le long de l'axe longitudinal (L) et servant à empêcher une déformation plastique le long d'un axe de profondeur (T), qui est perpendiculaire à l'axe de largeur (B) et à l'axe longitudinal (L).

7. Dispositif de tampon selon la revendication 6,
**caractérisé en ce que**
l'au moins un élément raidisseur (23), qui est de préférence en forme de barre, s'étend le long d'un axe de profondeur (T), qui est perpendiculaire à l'axe de largeur (B) et à l'axe longitudinal (L), et est disposé de préférence entre le côté avant (3) de la plaque de support (2) et l'ensemble d'étriers à ressort (8), qui est espacé de l'élément raidisseur (23) le long de l'axe de profondeur (T), et/ou **en ce que** l'élément raidisseur (23) est disposé latéralement à la plaque de support (2) le long de l'axe de largeur (B), l'élément raidisseur (23) dépassant la largeur de la plaque de support (2) le long de l'axe de profondeur (T).

8. Dispositif de tampon selon la revendication 6 ou la revendication 7,
**caractérisé en ce**
**qu'**au moins deux éléments raidisseur (23), qui sont espacés l'un de l'autre le long de l'axe de largeur (B), sont disposés sur la plaque de support (2).

9. Dispositif de tampon selon l'une quelconque des revendications 6 à 8,
**caractérisé en ce que**
l'élément raidisseur (23) comprend au moins 60 % de la longueur de la plaque de support (2) le long de l'axe longitudinal (L).

10. Dispositif de tampon selon l'une quelconque des revendications précédentes,
**caractérisé en ce que**
la plaque de support (2) est fixée sur une plaque d'écartement (21) pour écarter la plaque de support (2) d'une surface de bâtiment d'un côté de montage arrière de la plaque de support (2), qui est détourné du côté avant (3) de la plaque de support (2), la plaque de support (2) dépassant de préférence la plaque d'écartement dans une direction verticale le long de l'axe longitudinal (L) dans la zone des éléments d'absorption de force (6).

11. Dispositif de tampon selon l'une quelconque des revendications précédentes,
**caractérisé en ce que**
le long de l'axe longitudinal (L) entre le palier de pivotement (5) et l'élément de sécurité (11), au moins un élément de tampon (18, 19), qui est de préférence déformable élastiquement ou plastiquement, est disposé entre le côté avant de la plaque de support et un côté arrière de l'ensemble d'étriers à ressort (8), qui fait face au côté avant (3) de la plaque de support (2).

12. Système comprenant au moins un dispositif de tampon (1) configuré selon l'une quelconque des revendications 1 à 11 et une station de chargement de camion comprenant une surface de bâtiment, la surface de bâtiment ayant un seuil de chargement (22) horizontal pour former une ouverture de chargement, le seuil de chargement (22) étant de préférence limité par un bord vertical de part et d'autre, le dispositif de tampon étant disposé sur la surface de bâtiment, de préférence avec l'axe longitudinal orienté verticalement.

13. Système selon la revendication 12,
**caractérisé en ce**
**qu'**au moins un élément raidisseur (23) est disposé sur la plaque de support (2), le dispositif de tampon (1) étant disposé sur la surface de bâtiment de telle manière que l'élément raidisseur (23) s'étend vers le seuil de chargement (22) le long de l'axe longitudinal (L) de part et d'autre.

14. Système selon la revendication 12 ou la revendication 13,
**caractérisé en ce**
**qu'**une plaque d'écartement (21) est disposée entre la surface de bâtiment et la plaque de support (2), la plaque d'écartement (21) étant espacée du seuil de chargement (22) le long de l'axe longitudinal (L).

15. Système selon la revendication 14,
**caractérisé en ce que**
l'élément raidisseur (23) de la plaque de support (2) dépasse partiellement la plaque d'écartement (21) vers le haut dans la direction verticale (V) le long de l'axe longitudinal (L) ou **en ce qu'**un élément de support arrière est disposé sur le côté de montage arrière de la plaque de support (2) dans la région dépassant la plaque d'écartement (21), l'élément de support servant à supporter la plaque de support (2) sur le bâtiment, notamment sur une surface de bâtiment horizontale adjacente au seuil de chargement (22).
